# FASCICULE DE BREVET EUROPEEN

(11) **EP 1 974 441 B1**
(45) Date de publication et mention de la délivrance du brevet: **16.11.2011**
(21) Numéro de dépôt: 07717747.5
(22) Date de dépôt: 05.01.2007
(51) Int. Cl.: H02K 15/06

(54) **DISPOSITIF DE TRANSFERT RADIAL D'UN BOBINAGE DE STATOR**
VORRICHTUNG ZUR RADIALEN ÜBERTRAGUNG EINER STATORSPULE
DEVICE FOR THE RADIAL TRANSFER OF A STATOR COIL

(30) Priorité: 16.01.2006 FR 0650142
(43) Date de publication de la demande: 01.10.2008
(73) Titulaire: Valeo Equipements Electriques Moteur, 94046 Créteil Cedex (FR)
(72) Inventeur: BODIN, Denis, F-62280 Saint Martin Boulogne (FR); CHOCHOY, Jean-Pierre, F-62240 Cremarest (FR); DEFEBVIN, Alain, F-62630 Cormont (FR); JAZE, Michel, F-62630 Frencq (FR); EVEN, Denis, F-75012 Paris (FR)
(74) Mandataire: de Lambilly Delorme, Marie Pierre
(86) Numéro de dépôt international: PCT/FR2007/050614
(87) Numéro de publication internationale: WO 2007/080340

(56) Documents cités:
- EP-A- 1 414 138
- EP-A- 1 526 630
- FR-A1- 2 846 481
- JP-A- 55 166 465
- JP-A- 56 083 247
- JP-A- 57 020 152
- JP-A- 2000 343 137
- US-A- 2 873 515
- US-A1- 2005 061 907
- PATENT ABSTRACTS OF JAPAN vol. 004, no. 141 (E-028), 4 octobre 1980 (1980-10-04) -& JP 55 094567 A (NIPPON DENSO CO LTD), 18 juillet 1980 (1980-07-18)

## Description

L'invention propose un dispositif pour le transfert d'un bobinage d'un stator de machine électrique tournante, notamment d'un moteur électrique, qui a été formé sur un support annulaire, vers un paquet de tôles du stator.

L'invention propose plus particulièrement un dispositif de transfert d'un bobinage d'un stator de machine électrique tournante qui est monté sur un support annulaire, vers un paquet de tôles du stator, du type dans lequel le paquet de tôles est de forme annulaire d'axe principal A globalement vertical et comporte une face cylindrique interne dans laquelle sont réalisées des rainures axiales qui sont réparties angulairement de manière régulière autour de l'axe A principal du paquet de tôles, du type dans lequel le support annulaire comporte une pluralité de rainures axiales réparties angulairement de manière régulière autour de l'axe principal du support annulaire, qui débouchent radialement dans la face cylindrique externe du support annulaire, et dans chacune desquelles est agencé au moins un brin axial du bobinage, le dispositif de transfert comportant :
- un corps fixe sur lequel sont montés le paquet de tôles et le support annulaire, de manière que le support annulaire soit reçu coaxialement dans le paquet de tôles, et de manière que chaque rainure du support annulaire débouche radialement dans une rainure axiale en vis-à-vis du paquet de tôles ;
- une pluralité de lames d'extraction dont au moins une lame d'extraction est reçue dans chaque rainure du support annulaire, et est apte à coulisser radialement dans la rainure associée, de manière à pousser radialement vers l'extérieur ledit au moins un brin axial qui est reçu dans la rainure associée, pour transférer le brin axial vers la rainure du paquet de tôle en vis-à-vis ;
- des moyens d'entraînement de chaque lame d'extraction en coulissement radial dans la rainure associée du support annulaire. Un tel dispositif est connu du document EP-A-1 526 630.

Selon un mode de réalisation connu, le bobinage d'un stator d'une machine électrique tournante est réalisé en mettant en forme puis en déposant des fils conducteurs sur un support linéaire. Ensuite, les fils conducteurs sont enroulés sur un support annulaire de manière à former le bobinage, puis le bobinage est transféré depuis ce support annulaire intermédiaire vers le paquet de tôles du stator.

Pour réaliser le transfert du bobinage depuis le support annulaire vers le paquet de tôles, il est connu d'utiliser un ensemble de lames radiales dont chacune est reçue dans une rainure associée du support annulaire et est apte à coulisser radialement vers l'extérieur dans la rainure associée du support annulaire, de manière qu'elle pousse les fils du bobinage vers le paquet de tôles du stator.

L'entraînement des lames radiales en coulissement par rapport au support annulaire est réalisé par l'intermédiaire d'un arbre central qui est agencé au centre du support annulaire, et qui comporte des portions en forme de rampe avec lesquelles les lames radiales sont aptes à coopérer.

Cependant, de manière générale, le diamètre intérieur du support annulaire est relativement réduit. Par conséquent, le volume disponible au centre du support annulaire pour l'agencement des lames radiales et de l'arbre central est relativement réduit.

C'est pourquoi il a été proposé de réaliser le bobinage en plusieurs parties qui sont montées sur le support annulaire, puis transférées vers le paquet de tôles en plusieurs phases successives.

L'invention a pour but de proposer un dispositif de transfert permettant de transférer la totalité du bobinage depuis le support annulaire vers le paquet de tôles en une seule opération.

Dans ce but, l'invention propose un dispositif de transfert du type décrit précédemment, **caractérisé en ce que** les moyens d'entraînement comportent au moins un disque d'entraînement coaxial à l'axe principal du paquet de tôles qui est monté à rotation par rapport au corps fixe autour de l'axe principal et qui coopère avec chaque lame d'extraction pour l'entraînement des lames d'extraction en coulissement radial par rapport au support annulaire, que
chaque lame d'extraction comporte un doigt axial qui est reçu dans une gorge associée du disque d'entraînement, et la gorge associée est réalisée de manière que la rotation du disque d'entraînement par rapport au corps fixe provoque un coulissement radial de la lame d'extraction par rapport au corps fixe, et en ce que
- chaque gorge est agencée sur le disque d'entraînement à l'une ou l'autre de deux cotes radiales différentes par rapport à l'axe principal A du disque.

Selon d'autres caractéristiques de l'invention :
- chaque gorge du disque d'entraînement est en forme d'une portion de spirale centrée sur l'axe A du disque d'entraînement ;
- le disque d'entraînement comporte une pluralité de gorges réparties angulairement de manière régulière autour de l'axe principal du disque d'entraînement, dont chaque gorge est associée à une lame d'extraction ;
- chaque lame d'extraction comporte une tige d'entraînement qui s'étend radialement vers l'extérieur depuis une extrémité axiale de la lame, et l'extrémité radiale externe libre de la tige d'entraînement porte le doigt axial de la lame d'extraction ;
- la tige d'entraînement est reçue dans une rainure radiale complémentaire du corps fixe, de manière que la tige d'entraînement est guidée en coulissement radialement par rapport au corps fixe ;
- le dispositif de transfert est réalisé en deux parties globalement symétriques par rapport à un plan radial médian, qui sont agencées axialement de part et d'autre du paquet de tôles et du support annulaire, et chaque partie du dispositif de transfert comporte une pluralité de lames d'extraction ;
- chaque partie comporte un anneau d'entraînement des lames d'extraction ;
- les anneaux d'entraînement des deux parties sont aptes à être entraînés simultanément en rotation autour de l'axe principal A ;
- chaque partie comporte un nombre de lames d'extraction égal au nombre de rainures du support annulaire ;
- les lames d'extraction sont montées coulissantes par rapport au support annulaire entre une position initiale radialement interne, et une position finale radialement externe dans laquelle un bord axial d'extrémité radiale externe de chaque lame est reçu en partie dans une rainure axiale associée du paquet de tôles.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective du dispositif de transfert selon l'invention, dans laquelle le paquet de tôles et le support annulaire sont représentés avant leur montage sur le dispositif de transfert;
- la figure 2 est une représentation schématique en perspective éclatée de la partie supérieure du dispositif de transfert ;
- la figure 3 est une représentation schématique en perspective avec arrachement du dispositif de transfert selon l'invention, dans laquelle les lames d'extraction sont représentées en position initiale ;
- la figure 4 est une vue similaire à celle de la figure 3, dans laquelle les lames d'extraction sont représentées en position finale pour laquelle le bobinage a été transféré sur le paquet de tôles.

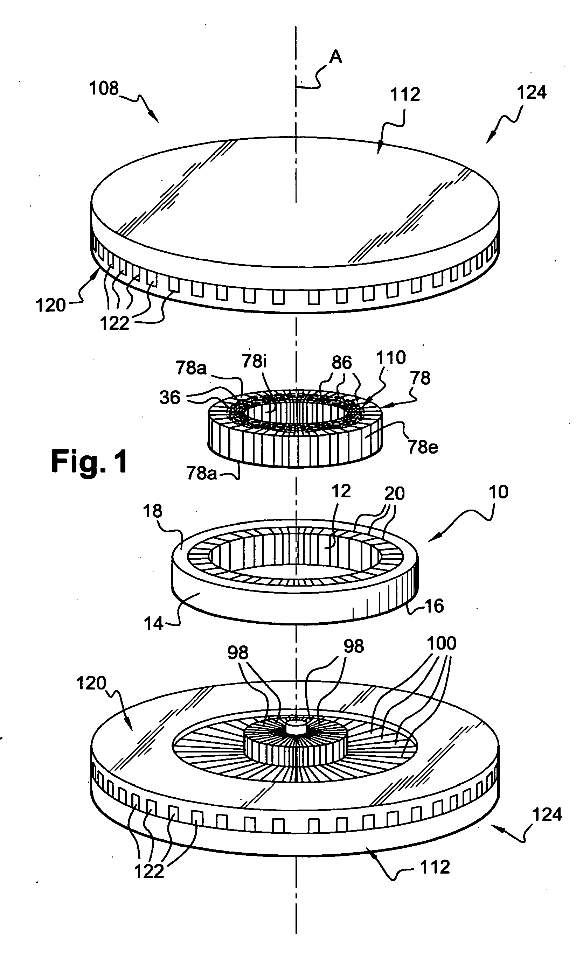

On a représenté à la figure 1, un dispositif 108 pour le transfert d'un bobinage 110 d'un stator de machine électrique tournante depuis un support annulaire 78 sur lequel le bobinage 110 a été formé, vers un paquet de tôles, ou corps 10 du stator.

Le paquet de tôles 10 a une forme cylindrique annulaire d'axe principal A globalement vertical et il consiste en un empilement axial de tôles planes.

Le paquet de tôles 10 est délimité radialement par une face cylindrique interne 12 et par une face cylindrique externe 14, et il est délimité axialement par une face d'extrémité axiale inférieure 16 et par une face d'extrémité axiale supérieure 18.

Le paquet de tôles 10 comporte des rainures axiales 20 qui débouchent axialement dans les faces d'extrémité axiale inférieure 16 et supérieure 18 du paquet de tôles 10.

Les rainures 20 sont ouvertes radialement dans la face cylindrique interne 12 du paquet de tôles 10 par l'intermédiaire d'une encoche axiale 26 qui s'étend depuis la face inférieure 16 jusqu'à la face supérieure 18. La largeur transversale de chaque encoche axiale 26 est inférieure à la largeur de la rainure 20 associée.

Les rainures 20 sont toutes identiques et elles sont par exemple au nombre de soixante-douze. Elles sont réparties angulairement de manière régulière autour de l'axe "A" du paquet de tôles 10.

La portion annulaire externe pleine du paquet de tôles 10 dans laquelle les rainures 20 ne s'étendent pas, est appelée culasse 28.

Le bobinage 110 est composé de plusieurs fils conducteurs électriquement formant des spires ondulées qui sont empilées radialement de manière à former une pluralité d'enroulement de phases, par exemple, six enroulement de phases.

Le support annulaire 78 est un élément de révolution qui est délimité radialement par une face cylindrique externe 78e et une face cylindrique interne 78i, qui est délimité axialement par deux faces d'extrémité axiale 78a, et qui comporte des rainures axiales 86 qui sont réparties angulairement de manière régulière autour de l'axe principal A du support annuaire 78 en débouchant axialement dans les faces d'extrémité axiale 78a du support annulaire et débouchant dans la face cylindrique externe 78e et la face cylindrique interne 78i du support annulaire 78.

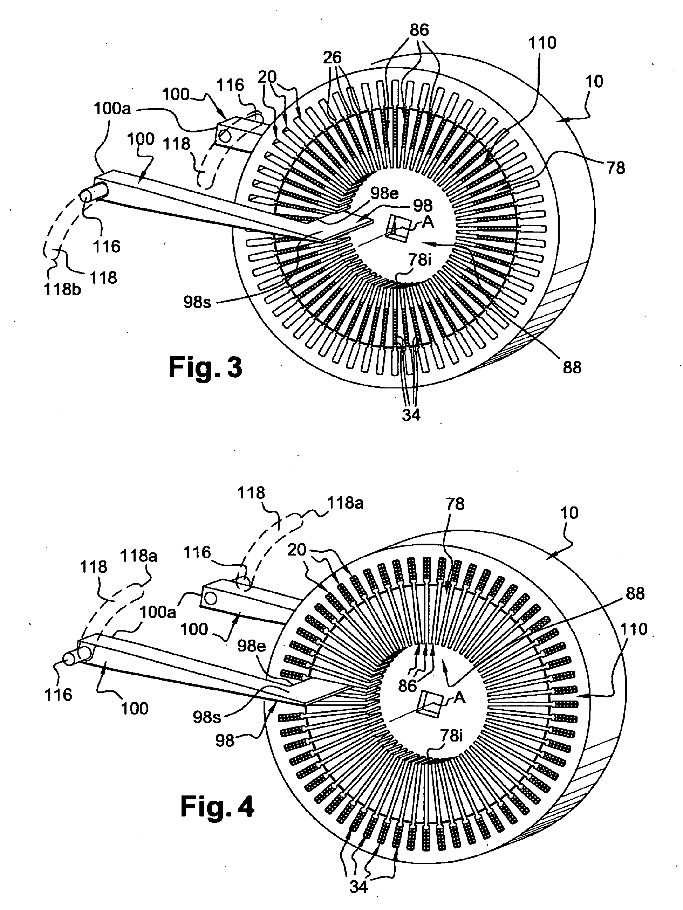

Comme on peut le voir plus en détails aux figures 3 et 4, le nombre de rainures 86 du support annulaire 78 est égal au nombre de rainure 20 du paquet de tôles 10, c'est-à-dire qu'ici le support annulaire 78 comporte soixante-douze rainures 86.

Le support annulaire 78 comporte un moyeu central 88 qui est relié à la face cylindrique interne 78i du support annulaire 78. Selon un mode de réalisation préféré, le support annulaire 78 est réalisé d'une seule pièce, par exemple par usinage d'un bloc métallique.

La longueur axiale du moyeu central 88 est inférieure à la distance entre les deux faces d'extrémité axiale 78a du support annulaire 78, et le moyeu central 88 est agencé axialement globalement au milieu du support annulaire 78, en retrait par rapport à chacune des deux faces d'extrémité axiale 78a du support annulaire 78.

Le bobinage 110 a été formé selon un procédé comportant une première étape de dépose de fils conducteurs sur un support linéaire (non représenté) de manière que chaque fil conducteur comporte des ondulations formant un développement linéaire de l'enroulement de phase associé, puis les fils conducteurs sont transférés sur le support annulaire 78 par roulage du support annulaire 78 sur le support linéaire, de manière à former les spires ondulées.

A l'issue de cette étape de roulage du support annulaire 78 sur le support linéaire, les fils conducteurs du bobinage 110 sont formés de manière qu'ils comportent des tronçons axiaux 34 qui sont répartis dans les rainures 86 du support annulaire 78, et des tronçons de liaison 36 qui sont répartis axialement de part et d'autre des faces d'extrémité axiale 78a du support annulaire, dont chaque tronçon de liaison relie deux tronçons axiaux du même fil conducteur.

Comme on peut le voir aux figures 3 et 4, le bobinage 110 est réalisé de manière que plusieurs tronçons axiaux 34 sont agencés dans chaque rainure 86 du support annulaire 78.

Le dispositif de transfert 108 selon l'invention est réalisé de manière que les tronçons axiaux 34 du bobinage 110 qui sont reçus dans une même rainure 86 du support annulaire soient tous transférés vers une même rainures 20 du paquet de tôles 10 selon un mouvement radial par rapport à l'axe principal du paquet de tôles 10.

Pour cela, en position montée sur le dispositif de transfert 108, le support annulaire 78 est reçu dans le paquet de tôles 10, coaxialement au paquet de tôles 10 et à l'axe principal A. De plus, le support annulaire 78 est réalisé de manière que le diamètre de sa face cylindrique externe 78e est globalement égal au diamètre de la face cylindrique interne 12 du paquet de tôles 10.

Lorsque le paquet de tôles 10 et le support annulaire 78 sont montés sur le dispositif de transfert 108, la face cylindrique externe 78e du support annulaire 78 est ainsi située radialement en vis-à-vis et à proximité de la face cylindrique interne 12 du paquet de tôles 10.

Enfin, le dispositif de transfert 108 comporte des moyens de positionnement angulaire (non représentés) du paquet de tôles 10 et du support 78 l'un par rapport à l'autre autour de l'axe principal A de manière que chaque rainure 86 du support annulaire 78 débouche radialement dans une rainure axiale 26 associée à une rainure 20 du paquet de tôles 10, c'est-à-dire de manière que chaque rainure 86 du support annulaire 78 soit situé en vis-à-vis d'une rainure 20 du paquet de tôles 10.

Pour réaliser le transfert des tronçons axiaux 34 du bobinage 110 depuis les rainures 86 du support annulaire 78 vers les rainures 20 du paquet de tôles 10, le dispositif de transfert 108 comporte des lames d'extraction radiale 98 qui sont mobiles dans les rainures 86 du support annulaire 78 de manière à pousser radialement vers l'extérieur les tronçons axiaux 34 du bobinage 110.

Le dispositif de transfert 108 comporte un ensemble de deux lames d'extraction 98 qui est associé à chaque rainure 86 du support annulaire 78 et qui est réalisé de sorte que les lames d'extraction 98 d'un même ensemble soient réparties axialement de part et d'autre du moyeu central 88 du support annulaire 78.

Comme on l'a dit plus haut, ici le support annulaire comporte soixante-douze rainures 86.

Par conséquent, le dispositif d'extraction 108 comporte soixante-douze ensembles de lames d'extraction 98, soit un total de cent quarante-quatre lames d'extraction 98.

Par souci de clarté, on a représenté aux figures 3 et 4 les lames d'extraction 98 appartenant à un seul ensemble de lames d'extraction 98.

Les ensembles de lames d'extraction 98 étant identiques, et répartis angulairement de manière régulière autour de l'axe principal A du support annulaire 78, la description d'un ensemble de lames d'extraction 98 qui va suivre s'applique de manière similaire aux autres ensembles de lames d'extraction 98.

Les deux lames d'extraction 98 d'un même ensemble sont associées à une seule rainure 86 du support annulaire 78, elles s'étendent dans le plan radial médian de la rainure 86 associée, et l'épaisseur de chaque lame d'extraction 98 est inférieure à la largeur de la rainure 86 associée.

Comme on peut le voir à la figure 3, lorsque le dispositif de transfert 108 est dans sa position initiale, les deux lames d'extraction 98 sont agencées radialement par rapport à l'axe principal A du support annulaire 78 dans une position centrale, de manière que le bord axial d'extrémité radiale externe 98e de chaque lame 98 soit situé radialement au niveau de la face cylindrique interne 78i du support annulaire 78.

Le dispositif de transfert 108 comporte aussi des moyens pour l'entraînement des lames d'extraction 98 en mouvement radialement par rapport à l'axe principal A du support annulaire 78, dans les rainures 86 du support annulaire 78.

Conformément à l'invention, les moyens d'entraînement des lames d'extraction 98 sont réalisés de manière que chaque lame d'extraction 98 soit apte à coulisser radialement dans la rainure associée 86 du support annulaire 78 sur toute la longueur radiale de ladite rainure associée 86.

Ainsi, comme on peut le voir à la figure 4, le bord axial 98e d'extrémité radiale externe de chaque lame d'extraction 98 est situé radialement à proximité de la face cylindrique externe 78e du support annulaire 78 à l'issue du mouvement radial vers l'extérieur des lames d'extraction 98, tous les brins axiaux 34 du bobinage ont alors été transférés dans les rainures 20 du paquet de tôles 10.

Selon une variante de réalisation de l'invention, chaque lame d'extraction 98 est reçue en partie à l'intérieur de la rainure 20 associée du paquet de tôles, de manière qu'aucun brin axial 86 ne soit situé à l'intérieur des encoches axiales 26. Ainsi, lorsque le dispositif de transfert 108 est en position finale, le bord axial d'extrémité radiale externe 98e de chaque lame d'extraction fait saillie radialement vers l'extérieur par rapport à la face cylindrique externe 78e du support annulaire.

Comme on l'a dit plus haut, le dispositif de transfert 108 comporte un ensemble de deux lames 98 qui est associé à chaque rainure 86 du support annulaire 78, et les deux lames d'entraînement 98 d'un même ensemble de lames sont agencées axialement de part et d'autre du moyeu central 88 du support annulaire 98.

Conformément à un autre aspect de l'invention, comme on peut le voir à la figure 1 , le dispositif de transfert 108 est réalisé en deux parties 124 qui sont agencées axialement de part et d'autre du paquet de tôles 10 et du support annulaire 78, et dont chaque partie 124 du dispositif de transfert 108 porte une lame d'extraction 98 de chaque ensemble de lames 98.

Selon un mode de réalisation préféré, les deux parties 124 du dispositif de transfert 108 sont globalement identiques et symétriques l'une part rapport à l'autre, vis-à-vis d'un plan radial médian du dispositif de transfert 108.

Dans la description qui va suivre, on fera référence à une partie 124 du dispositif de transfert 108, qui est ici la partie supérieure en se référant à la figure 1. Les deux parties du dispositif de transfert étant identiques, il sera compris que cette description s'applique à l'identique à l'autre partie 124 du dispositif de transfert 108.

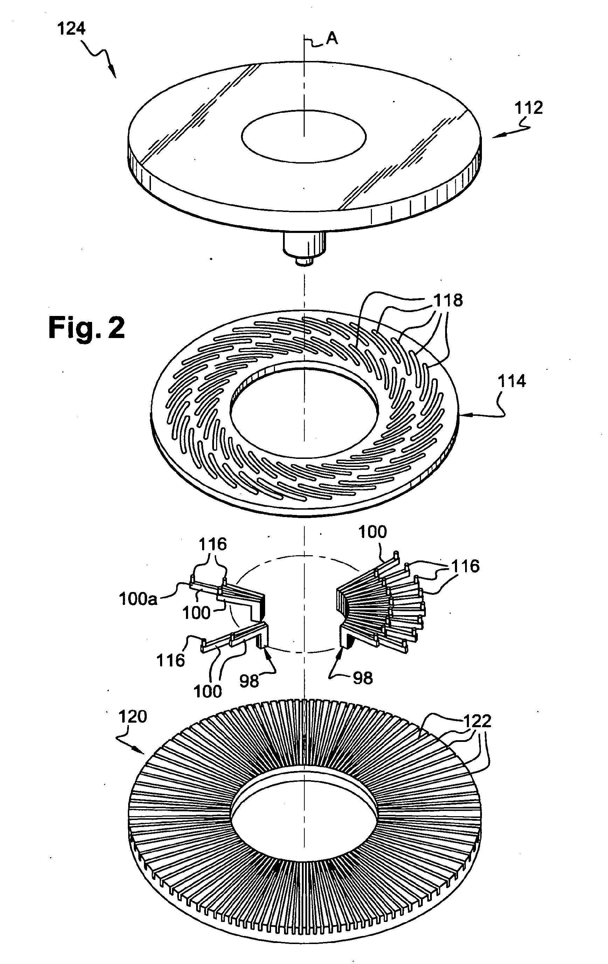

Comme on peut le voir à la figure 2, chaque partie 124 comporte un corps fixe 112 sur lequel le support annulaire 78 et le paquet de tôles 10 sont montés pour réaliser le transfert du bobinage, et par rapport auquel une lame d'extraction 98 de chaque ensemble de lames 98 est montée coulissante radialement.

Les moyens pour l'entraînement de chaque lame d'extraction 98 dans son mouvement de coulissement radial vers l'extérieur dans la rainure 86 associée du support annulaire 78 comportent un anneau d'entraînement 114 qui est monté à rotation par rapport au corps fixe 112 autour de l'axe principal A, et avec lequel chaque lame d'extraction 98 est apte à coopérer de manière qu'un pivotement de l'anneau d'entraînement 114 par rapport au corps fixe 112 provoque un coulissement radial de la lame d'extraction 98.

Pour cela, chaque lame d'extraction 98 comporte une tige radiale d'entraînement 100 qui s'étend radialement vers l'extérieur par rapport à l'axe principal A du support annulaire 78 depuis l'extrémité axiale externe 98s de la lame 98, qui est située à distance du moyeu central 88, et qui fait saillie axialement par rapport à la face associée du support annulaire 78.

L'extrémité axiale libre 100a de la tige radiale 100 porte un doigt axial qui est reçu dans une gorge 118 associée de l'anneau d'entraînement 114.

Conformément à l'invention, pour provoquer le coulissement radial de la lame d'extraction associée 98 lors de la rotation de l'anneau d'entraînement 114 par rapport au corps fixe 112, chaque gorge 118 est en forme d'une portion de spirale centrée sur l'axe principal A de l'anneau d'entraînement, et elle est de largeur globalement égale au diamètre du doigt axial 116 associé.

Comme on peut le voir à la figure 3, lorsque le dispositif de transfert 108 est dans sa position initiale, chaque doigt axial 116 est situé dans la gorge 118 associée au niveau de l'extrémité radialement interne 118a de la gorge 118.

Lors de la rotation de l'anneau d'entraînement 114, chaque doigt axial 116 coopère avec la gorge 118 associée de sorte qu'il est entraîné en déplacement radial par rapport au support fixe.

Enfin, comme on peut le voir à la figure 4, lorsque le dispositif de transfert 108 est dans sa position finale, chaque doigt axial 116 est situé dans la gorge 118 associée au niveau de l'extrémité 118d radialement externe de la gorge 118.

Le dispositif de transfert 108 comporte un disque de guidage 120 des lames d'extraction 98 en coulissement radialement par rapport au corps fixe 112, qui comporte un ensemble de rainures radiales 122, dans chacune desquelles est reçue une tige radiale 100 associée, de manière que la tige radiale 100 associée est guidée en coulissement radial par rapport au corps fixe 112 dans cette rainure radiale 122.

Comme on l'a dit plus haut, chaque partie 124 du dispositif de transfert 108 comporte une lame d'extraction 98 qui est associée à chaque rainure 86 du support annulaire 78.

Selon un mode de réalisation préféré de l'invention, le dispositif de transfert 108 est réalisé de manière que toutes les lames d'extraction 98 sont entraînées simultanément dans leur coulissement radial par rapport au support annulaire 78.

Ainsi, les deux lames d'extraction 98 d'un même ensemble de lames 98 sont entraînées simultanément, et les lames d'extraction 98 qui font partie d'une même partie 124 du dispositif de transfert 108 sont elles aussi entraînées simultanément en coulissement radial par rapport au support annulaire 78.

Pour cela, l'anneau d'entraînement 114 comporte un nombre de gorges 118 qui est égal au nombre de lames d'extraction 98, et par conséquent, qui est égal au nombre de rainures 86 du support annulaire 78. Ainsi, l'anneau d'entraînement 114 comporte ici soixante-douze gorges 118.

De plus, puisque les deux parties 124 du dispositif de transfert 108 sont similaires, pour obtenir la simultanéité du coulissement radial de toutes les lames d'extraction 98, les deux anneaux d'entraînement 114 sont entraînés simultanément en rotation par rapport aux corps fixes des deux parties 124 du dispositif de transfert 108.

Les gorges 118 de chaque anneau d'entraînement 114 sont réparties angulairement autour de l'axe A de l'anneau d'entraînement 114 de manière régulière.

Selon un premier mode de réalisation de l'anneau d'entraînement 114, les gorges 118 sont toutes agencées à une même côte radiale par rapport à l'axe principal A de l'anneau d'entraînement 114, en formant ainsi une couronne centrée sur l'axe principal A de l'anneau d'entraînement 114.

Par conséquent, les tiges radiales d'entraînement 100 ont toutes la même longueur radiale.

Selon un deuxième mode de réalisation de l'invention que l'on a représenté à la figure 2, les gorges 118 sont agencées radialement sur l'anneau d'entraînement 114 à l'une ou l'autre de deux côtes radiales par rapport à l'axe principal A de l'anneau d'entraînement 114, de manière que les gorges 118 forment deux couronnes coaxiales centrées sur l'axe principal A de l'anneau d'entraînement 114.

Par conséquent, chaque lame d'extraction 98 est entraînée par une tige radiale 100 dont la longueur radiale est égale à l'une ou l'autre de deux longueurs radiales différentes correspondant à la position sur l'anneau d'entraînement de la gorge 118 associée.

Selon un mode de réalisation préféré de ce deuxième mode de réalisation de l'invention, les gorges 118 sont réparties radialement de manière alternative sur l'anneau d'entraînement 114, de manière qu'une gorge 118 qui est située radialement à l'extérieur sur l'anneau d'entraînement 114 soit agencée angulairement entre deux gorges 118 qui sont situées radialement sur t'anneau d'entraînement 114 à la position radiale intérieure.

Par conséquent, une tige 100 de grande dimension radiale est située entre deux tiges 100 de la faible dimension radiale, comme on peut le voir notamment à la figure 2.

## Revendications

1. Dispositif (108) de transfert d'un bobinage (110) d'un stator de machine électrique tournante qui est monté sur un support annulaire (78), vers un paquet de tôles (10) du stator,
du type dans lequel le paquet de tôles (10) est de forme annulaire d'axe principal A globalement vertical et comporte une face cylindrique interne (12) dans laquelle sont réalisées des rainures axiales (20) qui sont réparties angulairement de manière régulière autour de l'axe (A) principal du paquet de tôles (10),
du type dans lequel le support annulaire (78) comporte une pluralité de rainures axiales (86) réparties angulairement de manière régulière autour de l'axe principal (A) du support annulaire (78), qui débouchent radialement dans la face cylindrique (78e) externe du support annulaire (78), et dans chacune desquelles est agencé au moins un brin axial (34) du bobinage (110),
le dispositif (108) de transfert comportant:
- un corps fixe (712) sur lequel sont montés le paquet de tôles (10) et le support annulaire (78), de manière que le support annulaire (78) soit reçu coaxialement dans le paquet de tôles (10), et de manière que chaque rainure (86) du support annulaire (78) débouche radialement dans une rainure axiale (20) en vis-à-vis du paquet de tôles (10),
- une pluralité de lames d'extraction (98) dont au moins une lame d'extraction (98) est reçue dans chaque rainure (86) du support annulaire (78), et est apte à coulisser radialement dans la rainure (86) associée, de manière à pousser radialement vers l'extérieur ledit au moins un brin axial (34) qui est reçu dans la rainure (86) associée, pour transférer le brin axial (34) vers la rainure (20) du paquet de tôles (10) en vis-à-vis,
- des moyens (100, 116, 118) d'entraînement de chaque lame d'extraction (98) en coulissement radial dans la rainure (86) associée du support annulaire (78),
- les moyens d'entraînement des lames d'extraction (98) sont réalisés de manière à entraîner chaque lame d'extraction (98) en coulissement radial par rapport au support annulaire (78) sur une distance au moins égale à la longueur radiale de la rainure associée du support annulaire (78),
**caractérisé en ce que** les moyens d'entraînement comportent au moins un disque d'entraînement (114) coaxial à l'axe principal (A) du paquet de tôles (10) qui est monté à rotation par rapport au corps fixe (112) autour de l'axe principal (A) et qui coopère avec chaque lame d'extraction (98) pour l'entraînement des lames d'extraction (98) en coulissement radial par rapport au support annulaire (78), que chaque lame d'extraction (98) comporte un doigt axial (116) qui est reçu dans une gorge (118) associée du disque d'entraînement (114), **en ce que** la gorge (118) associée est réalisée de manière que la rotation du disque d'entraînement (114) par rapport au corps fixe (112) provoque un coulissement radial de la lame d'extraction (98) par rapport au corps fixe (112), et **en ce que** chaque gorge (118) est agencée sur le disque d'entraînement (114) à l'une ou l'autre de deux cotes radiales différentes par rapport à l'axe principal (A) du disque.

2. Dispositif (108) selon la revendication précédente, **caractérisé en ce que** chaque gorge (118) du disque d'entraînement (114) est en forme d'une portion de spirale centrée sur l'axe principal (A) du disque d'entraînement (114).

3. Dispositif (108) selon la revendication précédente, **caractérisé en ce que** le disque d'entraînement (114) comporte une pluralité de gorges (118) réparties angulairement de manière régulière autour de l'axe principal (A) du disque d'entraînement (114), dont chaque gorge (118) est associée à une lame d'extraction (98).

4. Dispositif (108) selon l'une quelconque des revendications 2 à 3, **caractérisé en ce que** chaque lame d'extraction (98) comporte une tige d'entraînement (100) qui s'étend radialement vers l'extérieur depuis une extrémité axiale (98s) de la lame (98), et **en ce que** l'extrémité radiale externe libre (100a) de la tige d'entraînement (100) porte le doigt axial (116) de la lame d'extraction (98).

5. Dispositif (108) selon la revendication précédente, **caractérisé en ce que** la tige d'entraînement (100) est reçue dans une rainure radiale (122) complémentaire du corps fixe (112), de manière que la tige d'entraînement (100) est guidée en coulissement radialement par rapport au corps fixe (112).

6. Dispositif (108) selon l'une quelconque des revendications précédentes, **caractérisé en ce qu'**il est réalisé en deux parties (124) globalement symétriques par rapport à un plan radial médian, qui sont agencées axialement de part et d'autre du paquet de tôles (10) et du support annulaire (78), et **en ce que** chaque partie (124) du dispositif (108) de transfert comporte une pluralité de lames d'extraction (98).

7. Dispositif (108) selon la revendication précédente, **caractérisé en ce que** chaque partie (124) comporte un anneau d'entraînement (114) des lames d'extraction (98).

8. Dispositif (108) selon la revendication précédente, **caractérisé en ce que** les anneaux d'entraînement (114) des deux parties sont aptes à être entraînés simultanément en rotation autour de l'axe principal (A).

9. Dispositif (108) selon la revendication précédente, **caractérisé en ce que** chaque partie (124) comporte un nombre de lames d'extraction (98) égal au nombre de rainures (86) du support annulaire (78).

10. Dispositif (108) selon l'une quelconque des revendications précédentes, **caractérisé en ce que** les lames d'extraction (98) sont montées coulissantes par rapport au support annulaire (78) entre une position initiale radialement interne, et une position finale radialement externe dans laquelle un bord axial d'extrémité radiale externe (98e) de chaque lame (98) est reçu en partie dans une rainure axiale (20) associée du paquet de tôles (10).

## Claims

1. Device (108) for transferring a winding (110) of a stator of a rotating electrical machine which is mounted on an annular support (78), to a pack of plates (10) of the stator,
of the type in which the pack of plates (10) is of annular shape with a generally vertical main axis A and comprises an internal cylindrical face (12) in which are formed axial grooves (20) which are evenly distributed angularly around the main axis (A) of the pack of plates (10),
of the type in which the annular support (78) comprises a plurality of axial grooves (86) evenly distributed angularly around the main axis (A) of the annular support (78), which opens out radially into the external cylindrical face (78e) of the annular support (78), and in each of which is arranged at least one axial strand (34) of the winding (110),
the transfer device (108) comprising:
- a fixed body (112) on which are mounted the pack of plates (10) and the annular support (78), so that the annular support (78) is received coaxially in the pack of plates (10), and so that each groove (86) of the annular support (78) opens out radially into a facing axial groove (20) of the pack of plates (10),
- a plurality of extraction blades (98) of which at least one extraction blade (98) is received in each groove (86) of the annular support (78), and is able by sliding radially in the associated groove (86), so as to radially push outward said at least one axial strand (34) which is received in the associated groove (86), to transfer the axial strand (34) to the groove (20) of the facing pack of plates (10),
- means (100, 116, 118) for driving each extraction blade (98) by sliding radially in the associated groove (86) of the annular support (78),
- the means for driving the extraction blades (98) are produced in such a way as to drive each extraction blade (98) by sliding radially relative to the annular support (78) over a distance at least equal to the radial length of the associated groove of the annular support (78),
**characterized in that** the driving means comprise at least one driving disc (114) coaxial to the main axis (A) of the pack of plates (10) which is mounted to rotate relative to the fixed body (112) about the main axis (A) and which cooperates with each extraction blade (98) to drive the extraction blades (98) by sliding radially relative to the annular support (78), that each extraction blade (98) comprises an axial finger (116) which is received in an associated groove (118) of the driving disc (114), **in that** the associated groove (118) is produced in such a way that the rotation of the driving disc (114) relative to the fixed body (112) provokes a radial sliding of the extraction blade (98) relative to the fixed body (112), and **in that** each groove (118) is arranged on the driving disc (114) on one or other of two different radial sides relative to the main axis (A) of the disc.

2. Device (108) according to the preceding claim, **characterized in that** each groove (118) of the driving disc (114) is in the form of a spiral portion centred on the main axis (A) of the driving disc (114).

3. Device (108) according to the preceding claim, **characterized in that** the driving disc (114) comprises a plurality of grooves (118) evenly distributed angularly about the main axis (A) of the driving disc (114), of which each groove (118) is associated with an extraction blade (98).

4. Device (108) according to any one of Claims 2 to 3, **characterized in that** each extraction blade (98) comprises a driving rod (100) which extends radially outward from an axial end (98s) of the blade (98), and **in that** the free external radial end (100a) of the driving rod (100) bears the axial finger (116) of the extraction blade (98).

5. Device (108) according to the preceding claim, **characterized in that** the driving rod (100) is received in a complementary radial groove (122) of the fixed body (112), so that the driving rod (100) is guided by sliding radially relative to the fixed body (112).

6. Device (108) according to any one of the preceding claims, **characterized in that** it is produced in two parts (124) which are substantially symmetrical relative to a median radial plane, which are arranged axially on either side of the pack of plates (10) and of the annular support (78), and **in that** each part (124) of the transfer device (108) comprises a plurality of extraction blades (98).

7. Device (108) according to the preceding claim, **characterized in that** each part (124) comprises a driving ring (114) for the extraction blades (98).

8. Device (108) according to the preceding claim, **characterized in that** the driving rings (114) of the two parts can be driven simultaneously in rotation about the main axis (A).

9. Device (108) according to the preceding claim, **characterized in that** each part (124) comprises a number of extraction blades (98) equal to the number of grooves (86) of the annular support (78).

10. Device (108) according to any one of the preceding claims, **characterized in that** the extraction blades (98) are mounted to slide relative to the annular support (78) between a radially internal initial position, and a radially external final position in which an external radial end axial edge (98e) of each blade (98) is partly received in an associated axial groove (20) of the pack of plates (10).

## Patentansprüche

1. Vorrichtung (108) zur Übertragung einer Spule (110) eines Stator einer drehenden elektrischen Maschine, die auf einem ringförmigen Träger (78) angebracht ist, zu einem Blechpaket (10) des Stators,
jener Art, bei der das Blechpaket (10) eine Ringform mit einer Hauptachse (A) hat, die allgemein vertikal verläuft, und eine zylindrische Innenfläche (12) aufweist, in der Axialnuten (12) ausgebildet sind, die gleichmäßig winkelförmig um die Hauptachse (A) des Blechpakets (10) verteilt sind,
jener Art, bei der der ringförmige Träger (78) mehrere Axialnuten (86) aufweist, die gleichmäßig winkelförmig um die Hauptachse (A) des ringförmigen Trägers (78) verteilt sind und radial in der zylindrischen Außenfläche (78e) des ringförmigen Trägers (78) münden, und wobei in jeder davon mindestens ein axialer Strang (34) der Spule (110) angeordnet ist,
wobei die Übertragungsvorrichtung (108) Folgendes umfasst:
- einen feststehenden Körper (112), auf dem das Blechpaket (10) und der ringförmige Träger (78) so angebracht sind, dass der ringförmige Träger (78) koaxial in dem Blechpaket (10) aufgenommen wird und dass jede Nut (86) des ringförmigen Trägers (78) radial in einer gegenüberliegenden axialen Nut (20) des Blechpakets (10) mündet,
- mehrere Extraktionsblätter (98), von denen mindestens ein Extraktionsblatt (98) in jeder Nut (86) des ringförmigen Trägers (78) aufgenommen wird und dazu ausgeführt ist, radial in der zugehörigen Nut (86) zu gleiten, um den mindestens einen Axialstrang (34), der in der zugehörigen Nut (86) aufgenommen ist, radial nach außen zu drücken und so den Axialstrang (34) zur gegenüberliegenden Nut (20) des Blechpakets (10) zu übertragen,
- Mittel (100, 116, 118) zum Radialgleitantrieb jedes Extraktionsblatts (98) in der zugehörigen Nut (86) des ringförmigen Trägers (78),
- wobei die Mittel zum Antrieb der Extraktionsblätter (98) so ausgeführt sind, dass sie jedes Extraktionsblatt (98) radial bezüglich des ringförmigen Trägers (78) über eine Strecke gleitantreiben, die gleich der radialen Länge der zugehörigen Nut des ringförmigen Trägers (78) ist,
**dadurch gekennzeichnet, dass** die Antriebsmittel mindestens eine Antriebsscheibe (114) koaxial zur Hauptachse (A) des Blechpakets (10) umfassen, die drehbar bezüglich des feststehenden Körpers (112) um die Hauptachse (A) angebracht ist und für den Radialgleitantrieb der Extraktionsblätter (98) bezüglich des ringförmigen Trägers (78) mit jedem Extraktionsblatt (98) zusammenwirkt, dass jedes Extraktionsblatt (98) einen axialen Finger (116) umfasst, der in einer zugehörigen Kehle (118) der Antriebsscheibe (114) aufgenommen wird, und dass die zugehörige Kehle (118) so ausgeführt ist, dass die Drehung der Antriebsscheibe (114) bezüglich des feststehenden Körpers (112) ein radiales Gleiten des Extraktionsblatts (98) bezüglich des feststehenden Körpers (112) bewirkt, und dass jede Kehle (118) auf der einen oder anderen von zwei verschiedenen radialen Seiten bezüglich der Hauptachse (A) der Scheibe an der Antriebscheibe (114) angeordnet ist.

2. Vorrichtung (108) nach dem vorhergehenden Anspruch, **dadurch gekennzeichnet, dass** jede Kehle (118) der Antriebsscheibe (114) in Form eines spiralförmigen Teils vorliegt, der auf der Hauptachse (A) der Antriebsscheibe (114) zentriert ist.

3. Vorrichtung (108) nach dem vorhergehenden Anspruch, **dadurch gekennzeichnet, dass** die Antriebsscheibe (114) mehrere Kehlen (118) umfasst, die gleichmäßig winkelförmig um die Hauptachse (A) der Antriebsscheibe (114) verteilt sind, wobei jede Kehle (118) davon einem Extraktionsblatt (98) zugeordnet ist.

4. Vorrichtung (108) nach einem der Ansprüche 2 bis 3, **dadurch gekennzeichnet, dass** jedes Extraktionsblatt (98) eine Antriebsstange (100) aufweist, die sich von einem axialen Ende (98s) des Blatts (98) radial nach außen erstreckt, und dass das radiale äußere freie Ende (100a) der Antriebsstange (100) den axialen Finger (116) des Extraktionsblatts (98) trägt.

5. Vorrichtung (108) nach dem vorhergehenden Anspruch, **dadurch gekennzeichnet, dass** die Antriebsstange (100) in einer radialen Nut (122) aufgenommen wird, die zu dem feststehenden Körper (112) komplementär ist, so dass die Antriebsstange (100) bezüglich des feststehenden Körpers (112) gleitend geführt wird.

6. Vorrichtung (108) nach einem der vorhergehenden Ansprüche, **dadurch gekennzeichnet, dass** sie in zwei Teilen (124) ausgeführt ist, die bezüglich einer radialen Mittenebene allgemein symmetrisch sind und axial auf beiden Seiten des Blechpakets (10) und des ringförmigen Trägers (78) angeordnet sind, und dass jeder Teil (124) der Übertragungsvorrichtung (108) mehrere Extraktionsblätter (98) aufweist.

7. Vorrichtung (108) nach dem vorhergehenden Anspruch, **dadurch gekennzeichnet, dass** jeder Teil (124) einen Ring (114) zum Antrieb der Extraktionsblätter (98) aufweist.

8. Vorrichtung (108) nach dem vorhergehenden Anspruch, **dadurch gekennzeichnet, dass** die Antriebsringe (114) der beiden Teile gleichzeitig zu Drehung um die Hauptachse (A) angetrieben werden können.

9. Vorrichtung (108) nach dem vorhergehenden Anspruch, **dadurch gekennzeichnet, dass** jeder Teil (124) eine Anzahl von Extraktionsblättern (98) aufweist, die gleich der Anzahl von Nuten (86) des ringförmigen Trägers (78) ist.

10. Vorrichtung (108) nach einem der vorhergehenden Ansprüche, **dadurch gekennzeichnet, dass** die Extraktionsblätter (98) bezüglich des ringförmigen Trägers (78) zwischen einer radial inneren Anfangsstellung und einer radial äußeren Endstellung, in der ein axialer Rand (98e) des radial äußeren Endes jedes Blatts (98) teilweise in einer dem Blechpaket (10) zugeordneten Axialnut (20) aufgenommen ist, gleitend angebracht sind.
